# EUROPÄISCHE PATENTSCHRIFT

(11) **EP 3 361 027 B1**
(45) Veröffentlichungstag und Bekanntmachung des Hinweises auf die Patenterteilung: **29.07.2020**
(21) Anmeldenummer: 17207592.1
(22) Anmeldetag: 15.12.2017
(51) Int. Cl.: E05F 1/00, E05F 3/22, E05F 15/72, E05F 5/12, E05F 15/63

(54) **FESTSTELLEINRICHTUNG**
LOCKING DEVICE
DISPOSITIF DE DÉTERMINATION

(30) Priorität: 08.02.2017 DE 102017201939
(43) Veröffentlichungstag der Anmeldung: 15.08.2018
(73) Patentinhaber: GEZE GmbH, 71229 Leonberg (DE)
(72) Erfinder: Hucker, Dr., Matthias, 76359 Marxzell (DE)

(56) Entgegenhaltungen:
- EP-A1- 1 936 089
- EP-A1- 2 963 218
- DE-A1- 10 023 760
- DE-A1- 19 726 021
- DE-B3-102015 200 284

## Beschreibung

Die Erfindung betrifft eine Einrichtung zur Feststellung eines Flügels einer Tür oder dergleichen mit wenigstens einem als Generator betriebenen Elektromotor, dessen Motorwelle über eine Kraftübertragungseinheit mit dem Flügel in Wirkverbindung steht. Sie betrifft ferner einen Türschließer mit einer solchen Feststelleinrichtung.

Türschließer für bewegliche Türflügel mit einem mechanischen Energiespeicher und einer Dämpfungseinrichtung zur Dämpfung der Flügelbewegung sind allgemein bekannt. Beim manuellen Öffnen des Türflügels wird der mechanische Energiespeicher mit potentieller Energie aufgeladen, welche den losgelassenen Türflügel wieder schließt. Der mechanische Energiespeicher kann beispielsweise eine Feder umfassen, die durch das manuelle Öffnen des Türflügels gespannt wird und sich mit dem Schließen des Türflügels wieder entspannt.

Es sind auch bereits Antriebe zum Betätigen eines beweglichen Türflügels mit einer Dämpfungseinrichtung zur Dämpfung der Flügelbewegung bekannt, die einen als Generator betriebenen Elektromotor umfassen, dessen Motorwelle durch eine Bewegung des Türflügels drehbar ist und an dessen Motorklemmen eine bewegungsabhängige Motorspannung entsteht, die an einen Dämpfungsstromkreis angelegt ist. Der Dämpfungsstromkreis kann wenigstens ein beispielsweise als Feldeffekttransistor ausgeführtes Schaltelement aufweisen, über das die Motorklemmen kurzgeschlossen werden können. Im Dämpfungsstromkreis ist eine Drain-Source-Strecke des Feldeffekttransistors angeordnet. Eine Spannung zwischen Gate und Source des Feldeffekttransistors wird über ein Potentiometer eingestellt, das in Parallelschaltung mit der Drain-Source-Strecke des Feldeffekttransistors angeordnet ist. Ein Spannungsabgriff des Potentiometers ist an den Gate-Anschluss des Feldeffekttransistors angeschlossen. Damit wird der Feldeffekttransistor als spannungsabhängiger Lastwiderstand für den Elektromotor betrieben, so dass die Dämpfungskraft der Dämpfungsvorrichtung von der Ausgangsspannung des als Generator betriebenen Elektromotors abhängig ist.

Es sind auch bereits Feststelleinrichtungen bekannt, mit denen ein Türflügel bei bestimmten Öffnungswinkeln feststellbar ist. Insbesondere bei Türöffnern mit einem eine Federeinheit umfassenden mechanischen Speicher und einem Generatormotor, dessen Motorklemmen zur Dämpfung des Flügels an einen Dämpfungsstromkreis angeschlossen sind, besteht nun aber das Problem, dass aufgrund der elektrischen Verluste der Dämpfungsmotor die Bewegung des Türflügels beim Schließen nur dämpfen, jedoch nicht anhalten, d.h. feststellen kann. Solange die Federkraft des mechanischen Speichers größer ist als die Reibung, wird die Federkraft den Türflügel selbst dann in Schließrichtung langsam weiterbewegen, wenn der Dämpfungsmotor vollständig kurzgeschlossen ist.

Die EP 1 936 089 A1 beschreibt einen Drehflügelantrieb mit einem Antrieb, einem Getriebe und einer Sperrvorrichtung für das Sperren eines anliegenden Schließerabschnitts.

Die DE 10 2015 200 284 B3 offenbart eine Bremsvorrichtung für einen beweglichen Türflügel mit einem als Generator betriebenen Elektromotor dessen Motorwelle durch eine Bewegung des Türflügels drehbar ist und welcher durch das Kurzschließen der Motorklemmen eine Bremskraft zur Dämpfung der Bewegung des Türflügels einstellt.

Die EP 2 963 218 A1 beschreibt eine Blockiereinrichtung für eine Schließfolgeregelungsvorrichtung einer zweiflügeligen Drehtüranlage mit einem Antriebsmotor und einer auf der Motorwelle gekoppelten Bremselement welches die Drehbewegung des Antriebsmotors bei Bedarf blockiert.

Der Erfindung liegt die Aufgabe zugrunde, eine Feststelleinrichtung sowie einen Türschließer der eingangs genannten Art anzugeben, mit denen die zuvor erwähnten Probleme beseitigt sind. Dabei soll insbesondere eine zuverlässige Feststellung des Flügels unter möglichst effektiver Nutzung der bei einem Antrieb mit generatorischer Dämpfung der Flügelbewegung bereits vorhandenen Komponenten auf möglichst einfache und entsprechend kostengünstige Weise verwirklicht werden.

Erfindungsgemäß wird diese Aufgabe durch eine Feststelleinrichtung mit den Merkmalen des Anspruchs 1 sowie einen Türschließer mit den Merkmalen des Anspruchs 14 gelöst. Bevorzugte Ausführungsformen der erfindungsgemäßen Feststelleinrichtung sowie des erfindungsgemäßen Türschließers ergeben sich aus den Unteransprüchen.

Die erfindungsgemäße Einrichtung zur Feststellung eines Flügels einer Tür oder dergleichen umfasst wenigstens einen als Generator betriebenen Elektromotor, dessen Motorwelle über eine Kraftübertragungseinheit mit dem Flügel in Wirkverbindung steht. Dabei sind die Motorklemmen wenigstens eines als Generator arbeitenden Elektromotors zur Dämpfung der Flügelbewegungen an einen Dämpfungsstromkreis angeschlossen. Zur Feststellung des Flügels ist die Motorwelle wenigstens eines als Generator arbeitenden Elektromotors durch eine Bremseinheit beaufschlagbar.

Aufgrund dieser Ausbildung wird auf einfache und entsprechend kostengünstige Weise eine zuverlässige Feststellung des Flügels gewährleistet, wobei die bei einem Antrieb mit generatorischer Dämpfung der Flügelbewegungen vorgesehenen Komponenten auf effektive Weise genutzt werden.

Bevorzugt umfasst die Bremseinheit eine elektromagnetische Bremse.

Erfindungsgemäß umfasst die Feststelleinrichtung eine Auswerte- und/oder Steuereinheit, über die die Bremseinheit ansteuerbar ist. Über eine solche Auswerte- und/oder Steuereinheit ist eine variable Einstellung der Feststellung, insbesondere eine zeitbegrenzte Feststellung und/oder dergleichen möglich.

Erfindungsgemäß ist wenigstens ein als Generator betriebener Elektromotor über seine Motorklemmen an einen Ladestromkreis angeschlossen, über den die Auswerte- und/oder Steuereinheit mit elektrischer Energie versorgbar ist. Es ist somit ein autarker, d.h. auch ohne Energiezufuhr von außen möglicher Betrieb der Feststelleinrichtung gewährleistet.

Die Bremseinheit kann beispielsweise entsprechend dem Arbeitsstromprinzip monostabil betreibbar sein. Dabei kann die Bremseinheit im Ruhezustand bzw. bei nicht anliegendem Steuersignal die betreffende wenigstens eine Motorwelle zur Feststellung des Flügels beaufschlagen. Sobald ein Steuersignal angelegt wird oder spätestens sobald ein über den Ladestromkreis aufzuladender Energiespeicher leer ist, wird die Bremseinheit gelöst.

Gemäß einer alternativen Ausführungsform kann die Bremseinheit auch bistabil betreibbar sein. Dies bringt unter anderem den Vorteil mit sich, dass nur während der Schaltzeiten Energie aus dem Energiespeicher benötigt wird. Dabei ist es gegebenenfalls zweckmäßig, wenn die Auswerte- und/oder Steuereinheit den über den Ladestromkreis aufladbaren Energiespeicher überwacht, um die Feststellung des Flügels gegebenenfalls rechtzeitig lösen zu können, solange die in diesem Energiespeicher gespeicherte Energie noch ausreicht.

Erfindungsgemäß umfasst die Feststelleinrichtung wenigstens zwei jeweils als Generator betriebene Elektromotoren, von denen einer über seine Motorklemmen an den Dämpfungsstromkreis und der andere über seine Motorklemmen an den Ladestromkreis angeschlossen ist. In diesem Fall dient der eine Elektromotor somit als Dämpfungsmotor zur Dämpfung der Flügelbewegungen und der andere Elektromotor als Generatormotor zur Erzeugung der zur Aufladung des Energiespeichers über den Ladestromkreis benötigten Energie.

Dabei ist zur Feststellung des Flügels die Motorwelle des über seine Motorklemmen an den Ladestromkreis angeschlossenen Elektromotors und/oder die Motorwelle des über seine Motorklemmen an den Dämpfungsstromkreis angeschlossenen Elektromotors durch die Bremseinheit beaufschlagbar.

Von Vorteil ist insbesondere auch, wenn der Dämpfungsstromkreis über die Auswerte- und/oder Steuereinheit ansteuerbar ist.

Dabei umfasst der Dämpfungsstromkreis bevorzugt wenigstens ein über die Auswerte- und/oder Steuereinheit ansteuerbares Schaltelement, über das eine Pulsweitenmodulation des Motorstroms durchführbar ist. Die Pulsweitenmodulation des Motorstroms ermöglicht in vorteilhafter Weise die Vorgabe einer Schließzeit, welche beispielsweise durch Regelung der Schließgeschwindigkeit als Funktion des Öffnungswinkels des Türflügels konstant gehalten werden kann. Die gewünschte Schließzeit kann in vorteilhafter Weise unabhängig von Temperatur, Alterung und Reibung vorgegeben und eingestellt werden.

Bevorzugt ist die Bremseinheit über die Auswerte- und/oder Steuereinheit zur Erzeugung einer zeitbegrenzten Feststellung des Flügels ansteuerbar.

Gemäß einer zweckmäßigen praktischen Ausführungsform der erfindungsgemäßen Feststelleinrichtung ist die Bremseinheit über die Auswerte- und/oder Steuereinheit zur Einstellung einer vorgebbaren Schließverzögerung des Flügels ansteuerbar. Im Fall eines Türschließers kann der geöffnete Flügel somit erst nach einer bestimmten Zeit schließen. Es kann damit beispielsweise dem Umstand Rechnung getragen werden, dass das Passieren der Tür einige Zeit benötigt, um beispielsweise größere Gegenstände durch die Tür zu transportieren. Wollen mehrere Personen die Tür passieren, so wird ebenfalls mehr Zeit benötigt, während der die Tür offengehalten werden soll.

Gemäß einer weiteren vorteilhaften Ausführungsform der erfindungsgemäßen Feststelleinrichtung ist die Bremseinheit über die Auswerte- und/oder Steuereinheit in Abhängigkeit von Ausgangssignalen einer Sicherheitssensorik ansteuerbar.

Wird durch das Schließen des Türflügels beispielsweise eine Person gefährdet, so kann der Türflügel zumindest für eine kurze Zeit angehalten werden, damit die Person sich aus dem Gefahrenbereich entfernen kann.

Gemäß einer weiteren bevorzugten praktischen Ausführungsform der erfindungsgemäßen Feststelleinrichtung ist bei einer zweiflügeligen Tür mit einem Standflügel und einem Gangflügel beiden Flügeln jeweils wenigstens ein als Generator betriebener Elektromotor zugeordnet und zur Feststellung der beiden Flügel jeweils die Motorwelle eines einem jeweiligen Flügel zugeordneten Elektromotors durch eine Bremseinheit beaufschlagbar.

Dabei kann über die Auswerte- und/oder Steuereinheit insbesondere die Schließfolge der beiden Flügel steuer- und/oder regelbar sein.

Es kann somit insbesondere eine zweiflügelige Brandschutztür mit einer erfindungsgemäßen Feststelleinrichtung bzw. entsprechenden erfindungsgemäßen Türschließern ausgestattet sein. Wird der Standflügel geöffnet, während der Gangflügel schließt, soll der Gangflügel den Schließvorgang zumindest solange unterbrechen, bis der Standflügel wieder weiter geschlossen ist als der Gangflügel. Umgekehrt soll der Standflügel automatisch auslösen, falls der Gangflügel manuell ausgelöst wird.

Gemäß einer weiteren vorteilhaften Ausführungsform der erfindungsgemäßen Feststelleinrichtung ist bei einem Flügel einer Brandschutztür oder dergleichen die dem Flügel zugeordnete Bremseinheit über die Auswerte- und/oder Steuereinheit so ansteuerbar, dass eine jeweilige Feststellung des Flügels im Brandfall gelöst wird.

Dabei kann die Feststellung wieder nach dem Arbeitsstromprinzip monostabil oder bistabil ausgeführt sein. Im Fall einer monostabilen Ausführung kann eine jeweilige Bremseinheit gelöst werden, sobald von einem Brandmelder ein Steuersignal eintrifft, spätestens jedoch, sobald der über den Ladestromkreis aufladbare Energiespeicher leer ist. Eine bistabile Ausführung bringt, wie bereits erwähnt, den Vorteil mit sich, dass nur während der Schaltzeiten Energie aus dem Energiespeicher benötigt wird. Über die Auswerte- und/oder Steuereinheit wird dann zweckmäßigerweise der Ladezustand des Energiespeichers überwacht, um die Feststellung rechtzeitig lösen zu können, solange die im Energiespeicher gespeicherte Energie noch ausreicht.

Über die Auswerte- und/oder Steuereinheit kann die wenigstens eine Bremseinheit somit insbesondere zur Einstellung einer vorgebbaren Schließverzögerung und/oder in Abhängigkeit von Ausgangssignalen einer Sicherheitssensorik und/oder zur Steuerung und/oder Regelung der Schließfolge bei einer zweiflügeligen Tür und/oder zum Lösen im Brandfall bei einem Flügel einer Brandschutztür ansteuerbar sein.

Zur Feststellung eines Flügels kann erfindungsgemäß also wenigstens eine beispielsweise elektromagnetische Bremseinheit zur Beaufschlagung wenigstens einer Motorwelle wenigstens eines als Generator betriebenen Elektromotors vorgesehen sein. Aufgrund der in der Regel hohen Untersetzung des einem jeweiligen Elektromotor zugeordneten Getriebes reichen geringste Momente zum Halten der den Energiespeicher bildenden Federeinheit aus. Wie bereits erwähnt, kann eine jeweilige Bremseinheit monostabil oder bistabil ausgeführt sein.

Soll ein mit einer erfindungsgemäßen Feststelleinrichtung versehener Türschließer grundsätzlich mit Schließverzögerung arbeiten, so wird kein externes Signal benötigt. Die Schließverzögerung kann als Parameter beispielsweise über eine Nahfeldkommunikation NFC (near field communication) in einen Datenspeicher eingegeben werden. Der Flügel schließt nach Ablauf der durch die Auswerte- und/oder Steuereinheit vorgebbaren Zeit oder sobald der über den Ladestromkreis aufladbare Energiespeicher leer ist. Für größere Zeiten kann die Energie im Energiespeicher mit einer zusätzlichen Batterie oder einem Akkumulator vergrößert werden.

Alternativ oder zusätzlich kann die Schließverzögerung auch über ein Signal gesteuert werden. Im einfachsten Fall kann ein Schalter oder dergleichen vorgesehen sein, um die feste Verzögerung ein- und auszuschalten. Die Schließverzögerung kann auch über eine Sensorik (zum Beispiel Passiv-Infrarot-Sensoren) gesteuert werden. Der Flügel kann in diesem Fall beispielsweise solange offen bleiben, wie von der Sensorik Personen erfasst werden, die die Tür passieren wollen. Auch in diesem Fall kann für möglichst große Verzögerungszeiten auch ein zusätzlicher Akkumulator oder eine Batterie eingesetzt werden. Es sind auch solche Ausführungen denkbar, bei denen die Sensorik mit einer eigenen Batterie und/oder einem eigenen Akkumulator versehen ist. Zudem kann eine entsprechende Sensorik auch im jeweiligen Türschließer integriert sein.

Ist eine jeweilige Bremseinheit über die Auswerte- und/oder Steuereinheit in Abhängigkeit von Ausgangssignalen einer Sicherheitssensorik ansteuerbar, so kann beispielsweise die Bewegungsfläche wie beispielsweise eine Nebenschließkante des Flügels gesichert werden. Die betreffende Sicherheitssensorik kann mit einer eigenen Batterie oder einem eigenen Akkumulator versehen sein.

Ist der Flügel offen und liefert die Sensorik ein aktives Signal, so kann der Flügel entsprechend einer vorgebbaren Schließverzögerung offengehalten werden. Liefert die Sensorik während des Schließens des Flügels ein aktives Steuersignal, so kann die Auswerte- und/oder Steuereinheit den Flügel zunächst mit maximaler Dämpfung, d.h. beispielsweise einer Pulsweitenmodulation von 100%, dämpfen und anschließend zusätzlich die wenigstens eine Bremseinheit zum Feststellen des Flügels entgegen der Kraft der Federeinheit aktivieren.

Bei der Steuerung und/oder Regelung der Schließfolge im Fall einer zweiflügligen Tür können die den beiden Türflügeln zugeordneten Energiespeicher gekoppelt sein. Damit kann insbesondere zum Schalten einer bistabilen Feststellung stets für genügend Energie gesorgt werden, indem die beiden Flügel der zweiflügligen Tür so angesteuert werden, dass sich der eine Flügel stets bewegt, wenn die Feststellung des anderen gehalten werden muss. Stehen der Gangflügel und der Standflügel beispielsweise offen und wird der Standflügel manuell gelöst, so dass dieser schließt, so kann die Feststellung des Gangflügels kurz vor Erreichen der Schließlage durch den Standflügel gelöst werden. Wird dagegen bei offenstehenden Flügeln der Gangflügel manuell gelöst, so kann die Feststellung des Standflügels unmittelbar freigegeben werden. Wird der Standflügel geöffnet während der Gangflügel schließt, kann der Gangflügel angehalten werden, bis der Standflügel wieder weiter geschlossen ist als der Gangflügel.

Erfindungsgemäß ist somit insbesondere auch eine autarke elektrische Schließfolge für Türschließer mit generatorischer Dämpfung realisierbar.

Ein jeweiliger als Generator betriebener Elektromotor kann insbesondere als permanent magnetisch erregter Gleichstrommotor ausgeführt sein.

Der erfindungsgemäße Türschließer umfasst einen mechanischen Energiespeicher, der durch manuelles Öffnen des Türflügels mit potentieller Energie aufladbar ist, die zum Schließen des Türflügels nutzbar ist, sowie eine Feststelleinrichtung. Er zeichnet sich dadurch aus, dass die Feststelleinrichtung entsprechend der Erfindung ausgeführt ist.

Die Erfindung wird im Folgenden anhand der Zeichnung näher erläutert. In dieser zeigt die einzige Figur in schematischer Darstellung eine beispielhafte Ausführungsform einer erfindungsgemäßen Einrichtung 10 zur Feststellung eines Flügels 12 einer Tür oder dergleichen. Dabei handelt es sich im vorliegenden Fall beispielsweise um den Flügel 12 einer Drehtür.

Die Feststelleinrichtung 10 umfasst wenigstens einen als Generator betriebenen Elektromotor 14; 16, dessen Motorwelle über eine Kraftübertragungseinheit so mit dem Flügel 12 verbunden ist, dass eine jeweilige Bewegung des Flügels 12 mit einer jeweiligen Bewegung der Motorwelle einhergeht. Dabei kann die Kraftübertragungseinheit u.a. jeweils insbesondere auch ein Getriebe 18; 20 umfassen.

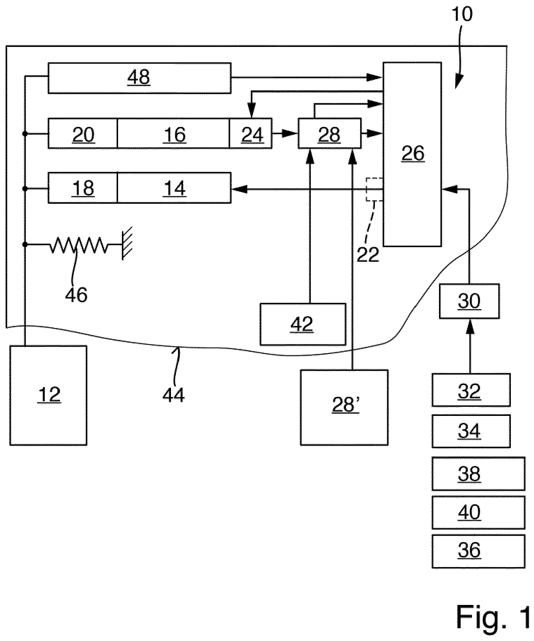

Die Motorklemmen wenigstens eines als Generator arbeitenden Elektromotors 14; 16 sind zur Dämpfung der Flügelbewegungen an einen Dämpfungsstromkreis 22 angeschlossen, wobei gemäß dem in der einzigen Fig. 1 dargestellten Ausführungsbeispiel lediglich die Motorklemmen des Elektromotors 14 an einen solchen Dämpfungsstromkreis 22 angeschlossen sind. Im vorliegenden Fall dient von den beiden Elektromotoren 14, 16 also lediglich der Elektromotor 14 als Dämpfungsmotor.

Zur Feststellung des Flügels 12 kann die Motorwelle wenigstens eines als Generator arbeitenden Elektromotors 14; 16 durch eine Bremseinheit 24 beaufschlagbar sein, wobei gemäß dem in der Fig. 1 dargestellten Ausführungsbeispiel lediglich die Motorwelle des Elektromotors 16 durch eine solche Bremseinheit 24 beaufschlagbar ist. Die Bremseinheit 24 kann insbesondere eine elektromagnetische Bremse umfassen.

Die Feststelleinrichtung 10 umfasst eine Steuerelektronik mit einer Auswerte- und/oder Steuereinheit 46, über die die Bremseinheit 24 ansteuerbar ist.

Wenigstens ein als Generator betriebener Elektromotor 14; 16 ist über seine Motorklemmen an einen Ladestromkreis zum Aufladen eines Energiespeichers 28 angeschlossen. Beim in der Fig. 1 dargestellten Ausführungsbeispiel ist lediglich der Elektromotor 16 über seine Motorklemmen an einen solchen zur Aufladung des Energiespeichers 28 vorgesehenen Ladestromkreis angeschlossen. Der Ladestromkreis ist ebenso wie der Dämpfungsstromkreis und die Auswerte- und/oder Steuereinheit 26 Teil der Auswerte- und/oder Steuerelektronik der Feststelleinrichtung 10. Insbesondere der Dämpfungsstromkreis 22 kann jedoch auch in der Auswerte- und/oder Steuereinheit 26 integriert sein.

Über den Ladestromkreis bzw. den über diesen aufladbaren Energiespeicher 28 ist die Auswerte- und/oder Steuereinheit 26 mit elektrischer Energie versorgbar. Es ist somit ein autarker Betrieb ohne Zufuhr elektrischer Energie von außen möglich.

Die Bremseinheit 24 ist entweder entsprechend dem Arbeitsstromprinzip monostabil betreibbar oder bistabil betreibbar.

Beim in der Fig. 1 dargestellten Ausführungsbeispiel umfasst die Feststelleinrichtung somit zwei jeweils als Generator betriebene Elektromotoren 14; 16, von denen einer, nämlich der Elektromotor 14, über seine Motorklemmen an den Dämpfungsstromkreis 22 und der andere, nämlich der Elektromotor 16, über seine Motorklemmen an den Ladestromkreis zum Aufladen des Energiespeichers 28 angeschlossen ist.

Zur Feststellung des Flügels 12 ist grundsätzlich die Motorwelle des über seine Motorklemmen an den Ladestromkreis angeschlossenen Elektromotors 16 und/oder die Motorwelle des über seine Motorklemmen an den Dämpfungsstromkreis 22 angeschlossenen Elektromotors 14 durch die Bremseinheit 24 beaufschlagbar. Grundsätzlich ist auch eine solche Ausführung denkbar, bei der jedem Elektromotor eine solche Bremseinheit zugeordnet ist. Beim in der Fig. 1 dargestellten Ausführungsbeispiel ist lediglich die Motorwelle des über seine Motorklemmen an den Ladestromkreis zum Aufladen des Energiespeichers 28 angeschlossenen Elektromotors 16 durch eine Bremseinheit 24 beaufschlagbar.

Der Dämpfungsstromkreis 22, der ebenso wie der Ladestromkreis mit zugeordnetem Energiespeicher 28 der Auswerte- und Steuerelektronik zugeordnet ist, ist über die Auswerte- und/oder Steuereinheit 26 ansteuerbar. Wie bereits erwähnt, kann dieser Dämpfungsstromkreis 22 auch in der Auswerte- und/oder Steuereinheit 26 integriert sein.

Der an die Motorklemmen des als Dämpfungsmotor dienenden Elektromotors 14 angeschlossene Dämpfungsstromkreis 22 kann wenigstens ein über die Auswerte- und/oder Steuereinheit 26 ansteuerbares Schaltelement umfassen, über das beispielsweise eine Pulsweitenmodulation des Motorstroms durchführbar ist. Dabei kann die Bewegung des Flügels 12 insbesondere in Abhängigkeit von der Position, Geschwindigkeit und/oder Drehrichtung des Flügels 12 durch einen entsprechenden beispielsweise pulsweitenmodulierten Kurzschluss des als Dämpfungsmotor dienenden Elektromotors 14 gedämpft werden.

Die Bremseinheit 24 ist über die Auswerte- und/oder Steuereinheit 26 insbesondere zur Erzeugung einer zeitbegrenzten Feststellung des Flügels 12 ansteuerbar.

Dabei ist die Bremseinheit 24 über die Auswerte- und/oder Steuereinheit 26 beispielsweise zur Einstellung einer vorgebbaren Schließverzögerung des Flügels 12 ansteuerbar.

Alternativ oder zusätzlich kann die Bremseinheit 24 über die Auswerte- und/oder Steuereinheit 26 auch in Abhängigkeit von Ausgangssignalen einer Sicherheitssensorik ansteuerbar sein.

Alternativ oder zusätzlich kann bei einer zweiflügligen Tür mit einem Standflügel und einem Gangflügel auch beiden Flügeln 12 jeweils wenigstens ein als Generator betriebener Elektromotor 14; 16 zugeordnet und zur Feststellung der beiden Flügel 12 jeweils die Motorwelle wenigstens eines einem jeweiligen Flügel 12 zugeordneten Elektromotors 14; 16 durch eine Bremseinheit 24 beaufschlagbar sein. Dabei kann über die Auswerte- und/oder Steuereinheit 26 insbesondere die Schließfolge der beiden Flügel 12 steuer- und/oder regelbar sein.

Alternativ oder zusätzlich kann bei einem Flügel 12 einer Brandschutztür oder dergleichen die dem Flügel 12 zugeordnete Bremseinheit 24 über die Auswerte- und/oder Steuereinheit 26 auch so ansteuerbar sein, dass eine jeweilige Feststellung des Flügels 12 im Brandfall gelöst wird. Damit ist sichergestellt, dass der Flügel im Brandfall durch den zugeordneten mechanischen Speicher geschlossen wird.

Wie aus der Fig. 1 ersichtlich, kann die Auswerte- und/oder Steuereinheit 26 die Bremseinheit 24 und/oder den Dämpfungsstromkreis 22 somit beispielsweise in Abhängigkeit von einem Signal 30 ansteuern, das im Fall einer Schließverzögerung beispielsweise durch einen Schalter 32 und/oder einen Personendetektor 34 und/oder durch eine Sicherheitssensorik 36 und/oder im Fall einer Brandschutztür durch einen Brandmelder und/oder im Fall einer zweiflügligen Tür mit einem Standflügel und einem Gangflügel durch eine Schließfolgevorgabe 40 und/oder dergleichen vorgebbar ist.

Insbesondere für größere Verzögerungszeiten kann auch ein zusätzlicher Akkumulator oder eine zusätzliche Batterie 42 zur Versorgung der Auswerte- und/oder Steuereinheit 26 mit elektrischer Energie vorgesehen sein. Im Fall einer zweiflügligen Tür können die Energiespeicher 28, 28' der den beiden Flügeln 12 zugeordneten Feststelleinrichtungen bzw. Türschließern miteinander gekoppelt werden. Insbesondere zum Schalten einer bistabilen Feststellung steht somit stets genügend elektrische Energie zur Verfügung, wenn ein Flügel jeweils bewegt wird, während die Feststellung des anderen gehalten werden muss, wie dies eingangs bereits näher erläutert wurde.

Wie der Fig. 1 zudem zu entnehmen ist, kann die erfindungsgemäße Feststelleinrichtung 10 insbesondere in einem Türschließer 44 mit einem mechanischen Energiespeicher 46 integriert sein, der durch manuelles Öffnen des Türflügels 12 mit potentieller Energie aufladbar ist, die zum Schließen des Türflügels 12 nutzbar ist. Dabei kann der mechanische Energiespeicher 46 des Türschließers 44 insbesondere eine Federeinheit umfassen.

Mit einer erfindungsgemäßen Feststelleinrichtung 10 ist somit insbesondere eine zeitlich begrenzte Feststellung eines Türflügels bei einem generatorisch gedämpften Türschließer beispielsweise für eine Schließverzögerung in Verbindung mit einem Sicherheitssensor, für eine Schließfolge bei einer zweiflügeligen Tür und/oder in Abhängigkeit von wenigstens einem Brandmelder realisierbar. Dabei ist der generatorisch gedämpfte Türschließer mit einer monostabilen oder bistabilen Feststellung versehen und die Versorgung der Feststellung mit elektrischer Energie aus einem autarken Energiespeicher gewährleistet.

Im Übrigen kann die Dämpfung der Flügelbewegungen insbesondere so erfolgen, wie dies in der DE 10 2015 200 284 B3 beschrieben ist.

Beim Öffnen des Türflügels 12 wird die Federeinheit des mechanischen Energiespeichers 46 gespannt. Gleichzeitig drehen die beiden Elektromotoren 14, 16. Der als Generatormotor dienende Elektromotor 16 erzeugt über den Ladestromkreis elektrische Energie, die im Energiespeicher 28 gespeichert wird, dessen Zustand durch die Auswerte- und/oder Steuereinheit 26 überwacht werden kann. Der Energiespeicher 28 versorgt die Auswerte- und/oder Steuereinheit 26 mit elektrischer Energie. Die Bewegungen des Flügels 12 werden in Abhängigkeit von der Position, Geschwindigkeit und/oder Drehrichtung des Flügels 12 durch die Auswerte- und/oder Steuereinheit 26 über den Dämpfungsstromkreis 22 beispielsweise durch einen pulsweitenmodulierten Kurzschluss der Motorklemmen des als Dämpfungsmotor dienenden Elektromotors 14 gedämpft. Position, Geschwindigkeit und/oder Drehrichtung des Flügels 12 können über entsprechende Messkreise 48 erfasst und an die Auswerte- und/oder Steuereinheit 26 übermittelt werden. Für bestimmte Situationen ist eine zeitbegrenzte Feststellung des Flügels 12 durch eine entsprechende Ansteuerung der dem als Generatormotor dienenden Elektromotor 16 zugeordneten Bremseinheit 24 durch die Auswerte- und/oder Steuereinheit 26 möglich.

### Bezugszeichenliste

- 10: Feststelleinrichtung
- 12: Flügel
- 14: Elektromotor
- 16: Elektromotor
- 18: Getriebe
- 20: Getriebe
- 22: Dämpfungsstromkreis
- 24: Bremseinheit
- 26: Auswerte- und / oder Steuereinheit
- 28: Energiespeicher
- 30: Signal
- 32: Schalter
- 34: Personendetektor
- 36: Sicherheitssensorik
- 38: Brandmelder
- 40: Schließfolge
- 42: zusätzlicher Akkumulator / Batterie
- 44: Türschließer
- 46: mechanischer Energiespeicher
- 48: Messkreise

## Patentansprüche

1. Feststelleinrichtung (10) zur Feststellung eines Flügels (12) einer Tür oder dergleichen, mit wenigstens einem als Generator betriebenen Elektromotor (14; 16), dessen Motorwelle über eine Kraftübertragungseinheit mit dem Flügel (12) in Wirkverbindung steht, wobei die Motorklemmen wenigstens eines als Generator arbeitenden Elektromotors (14; 16) zur Dämpfung der Flügelbewegungen an einen Dämpfungsstromkreis (22) angeschlossen sind und die Motorwelle wenigstens eines als Generator arbeitenden Elektromotors (14; 16) zur Feststellung des Flügels (12) durch eine Bremseinheit (24) der Feststelleinrichtung beaufschlagbar ist, wobei die Feststelleinrichtung (10) eine Auswerte- und/oder Steuereinheit (26) umfasst, über die die Bremseinheit (24) ansteuerbar ist, und wenigstens ein als Generator betriebener Elektromotor (14; 16) über seine Motorklemmen an einen Ladestromkreis angeschlossen ist, über den die Auswerte- und/oder Steuereinheit (26) mit elektrischer Energie versorgbar ist, wobei die Feststelleinrichtung (10) wenigstens zwei jeweils als Generator betriebene Elektromotoren (14; 16) umfasst, von denen einer über seine Motorklemmen an den Dämpfungsstromkreis (22) und der andere über seine Motorklemmen an den Ladestromkreis angeschlossen ist, wobei zur Feststellung des Flügels (12) die Motorwelle des über seine Motorklemmen an den Ladestromkreis angeschlossenen Elektromotors (16) und/oder die Motorwelle des über seine Motorklemmen an den Dämpfungsstromkreis (22) angeschlossenen Elektromotors (14) durch die Bremseinheit (24) beaufschlagbar ist.

2. Feststelleinrichtung nach Anspruch 1,
**dadurch gekennzeichnet, dass** die Bremseinheit (24) eine elektromagnetische Bremse umfasst.

3. Feststelleinrichtung nach zumindest einem der vorstehenden Ansprüche,
**dadurch gekennzeichnet, dass** die Bremseinheit (24) entsprechend dem Arbeitsstromprinzip monostabil betreibbar ist.

4. Feststelleinrichtung nach einem der Ansprüche 1 bis 2,
**dadurch gekennzeichnet, dass** die Bremseinheit (24) bistabil betreibbar ist.

5. Feststelleinrichtung nach zumindest einem der vorstehenden Ansprüche,
**dadurch gekennzeichnet, dass** der Dämpfungsstromkreis (22) über die Auswerte- und/oder Steuereinheit (26) ansteuerbar ist.

6. Feststelleinrichtung nach Anspruch 5,
**dadurch gekennzeichnet, dass** der Dämpfungsstromkreis (22) wenigstens ein über die Auswerte- und/oder Steuereinheit (26) ansteuerbares Schaltelement umfasst, über das eine Pulsweitenmodulation des Motorstroms durchführbar ist.

7. Feststelleinrichtung nach zumindest einem der vorstehenden Ansprüche,
**dadurch gekennzeichnet , dass** die Bremseinheit (24) über die Auswerte- und/oder Steuereinheit (26) zur Erzeugung einer zeitbegrenzten Feststellung des Flügels (12) ansteuerbar ist.

8. Feststelleinrichtung nach zumindest einem der vorstehenden Ansprüche,
**dadurch gekennzeichnet, dass** die Bremseinheit (24) über die Auswerte- und/oder Steuereinheit (26) zur Einstellung einer vorgebbaren Schließverzögerung des Flügels (12) ansteuerbar ist.

9. Feststelleinrichtung nach zumindest einem der vorstehenden Ansprüche,
**dadurch gekennzeichnet, dass** die Bremseinheit (24) über die Auswerte- und/oder Steuereinheit (26) in Abhängigkeit von Ausgangssignalen einer Sicherheitssensorik ansteuerbar ist.

10. Feststelleinrichtung nach zumindest einem der vorstehenden Ansprüche,
**dadurch gekennzeichnet, dass** bei einer zweiflügeligen Tür mit einem Standflügel und einem Gangflügel beiden Flügeln (12) jeweils wenigstens ein als Generator betriebener Elektromotor (14; 16) zugeordnet und zur Feststellung der beiden Flügel (12) jeweils die Motorwelle wenigstens eines einem jeweiligen Flügel (12) zugeordneten Elektromotors durch eine Bremseinheit (24) beaufschlagbar ist.

11. Feststelleinrichtung nach Anspruch 10,
**dadurch gekennzeichnet, dass** über die Auswerte- und/oder Steuereinheit (26) die Schließfolge der beiden Flügel (12) steuer- und/oder regelbar ist.

12. Feststelleinrichtung nach einem der Ansprüche 10 bis 11,
**dadurch gekennzeichnet, dass** bei einer zweiflügeligen Tür mit einem Standflügel und einem Gangflügel, die Auswerte- und Steuerungseinheit (26) mit einem zusätzlichen Akkumulator oder Batterie (42) ausgerüstet ist.

13. Feststelleinrichtung nach zumindest einem der vorstehenden Ansprüche,
**dadurch gekennzeichnet , dass** bei einem Flügel (12) einer Brandschutztür oder dergleichen die dem Flügel zugeordnete Bremseinheit (24) über die Auswerte- und/oder Steuereinheit (26) so ansteuerbar ist, dass eine jeweilige Feststellung des Flügels (12) im Brandfall gelöst wird.

14. Türschließer (44) mit einem mechanischen Energiespeicher (46), der durch manuelles Öffnen des Türflügels mit potentieller Energie aufladbar ist, die zum Schließen des Türflügels nutzbar ist, und mit einer Feststelleinrichtung,
**dadurch gekennzeichnet, dass** die Feststelleinrichtung (10) nach zumindest einem der vorstehenden Ansprüche ausgeführt ist.

## Claims

1. Locking device (10) for locking a leaf (12) of a door or the like, comprising at least one electric motor (14; 16) which is operated as a generator and the motor shaft of which is operatively connected to the leaf (12) by means of a force-transmitting unit, wherein the motor terminals of at least one electric motor (14; 16) operating as a generator are connected to an electrical damping circuit (22) for the purpose of damping the leaf movements, and the motor shaft of at least one electric motor (14; 16) operating as a generator can be acted on by a braking unit (24) of the locking device for the purpose of locking the leaf (12), wherein the locking device (10) comprises an evaluation and/or control unit (26) by means of which the braking unit (24) can be actuated, and at least one electric motor (14; 16) which is operated as a generator is connected to an electrical charging circuit by means of its motor terminals, it being possible for electrical energy to be supplied to the evaluation and/or control unit (26) by means of the said electrical charging circuit, wherein the locking device (10) comprises at least two electric motors (14; 16) which are each operated as a generator and one of which is connected to the electrical damping circuit (22) by means of its motor terminals and the other of which is connected to the electrical charging circuit by means of its motor terminals, wherein the motor shaft of the electric motor (16) which is connected to the electrical charging circuit by means of its motor terminals and/or the motor shaft of the electric motor (14) which is connected to the electrical damping circuit (22) by means of its motor terminals can be acted on by the braking unit (24) for the purpose of locking the leaf (12).

2. Locking device according to Claim 1,
**characterized in that** the braking unit (24) comprises an electromagnetic brake.

3. Locking device according to at least one of the preceding claims, **characterized in that** the braking unit (24) can be operated in a monostable manner in accordance with the open-circuit principle.

4. Locking device according to either of Claims 1 and 2,
**characterized in that** the braking unit (24) can be operated in a bistable manner.

5. Locking device according to at least one of the preceding claims,
**characterized in that** the electrical damping circuit (22) can be actuated by means of the evaluation and/or control unit (26).

6. Locking device according to Claim 5,
**characterized in that** the electrical damping circuit (22) comprises at least one switching element which can be actuated by means of the evaluation and/or control unit (26) and by means of which pulse-width modulation of the motor current can be carried out.

7. Locking device according to at least one of the preceding claims,
**characterized in that** the braking unit (24) can be actuated by means of the evaluation and/or control unit (26) for the purpose of generating time-limited locking of the leaf (12).

8. Locking device according to at least one of the preceding claims,
**characterized in that** the braking unit (24) can be actuated by means of the evaluation and/or control unit (26) for the purpose of adjusting a prespecifiable closing deceleration of the leaf (12).

9. Locking device according to at least one of the preceding claims,
**characterized in that** the braking unit (24) can be actuated by means of the evaluation and/or control unit (26) depending on output signals of a safety sensor system.

10. Locking device according to at least one of the preceding claims,
**characterized in that**, in the case of a two-leaf door with a passive leaf and an active leaf, at least one electric motor (14; 16) which is operated as a generator is assigned to each of the two leaves (12), and the motor shaft of at least one electric motor, which is associated with a respective leaf (12), can respectively be acted on by a braking unit (24) for the purpose of locking the two leaves (12).

11. Locking device according to Claim 10,
**characterized in that** the closing sequence of the two leaves (12) can be subjected to open-loop control and/or closed-loop control by means of the evaluation and/or control unit (26).

12. Locking device according to either of Claims 10 and 11,
**characterized in that**, in the case of a two-leaf door with a passive leaf and an active leaf, the evaluation and control unit (26) is equipped with an additional rechargeable battery or battery (42).

13. Locking device according to at least one of the preceding claims,
**characterized in that**, in the case of a leaf (12) of a fire door or the like, the braking unit (24) which is associated with the leaf can be actuated by means of the evaluation and/or control unit (26) such that respective locking of the leaf (12) is released in the event of a fire.

14. Door closer (44) comprising a mechanical energy store (46) which can be charged with potential energy by manually opening the door leaf, which potential energy can be used for closing the door leaf, and comprising a locking device, **characterized in that** the locking device (10) is designed according to at least one of the preceding claims.

## Revendications

1. Dispositif de verrouillage (10) pour le verrouillage d'un vantail (12) d'une porte ou autre, comprenant au moins un moteur électrique (14 ; 16) utilisé comme générateur, dont l'arbre moteur est en liaison active avec le vantail (12) par l'intermédiaire d'une unité de transmission de force, dans lequel les bornes de moteur d'au moins un moteur électrique (14 ; 16) fonctionnant comme générateur sont raccordées à un circuit d'amortissement (22) pour amortir les mouvements du vantail et l'arbre moteur d'au moins un moteur électrique (14 ; 16) fonctionnant comme générateur peut être sollicité par une unité de freinage (24) du dispositif de verrouillage pour le verrouillage du vantail (12), dans lequel le dispositif de verrouillage (10) comprend une unité d'évaluation et/ou de commande (26) au moyen de laquelle l'unité de freinage (24) peut être commandée, et au moins un moteur électrique (14 ; 16) utilisé comme générateur est raccordé par l'intermédiaire de ses bornes de moteur à un circuit de charge au moyen duquel l'unité d'évaluation et/ou de commande (26) peut être alimentée en énergie électrique, dans lequel le dispositif de verrouillage (10) comprend au moins deux moteurs électriques (14 ; 16) respectivement utilisés comme générateur, dont l'un est raccordé par l'intermédiaire de ses bornes de moteur au circuit d'amortissement (22) et l'autre est raccordé par l'intermédiaire de ses bornes de moteur au circuit de charge, dans lequel, pour le verrouillage du vantail (12), l'arbre moteur du moteur électrique (16) raccordé par ses bornes de moteur au circuit de charge et/ou l'arbre moteur du moteur électrique (14) raccordé par ses bornes de moteur au circuit d'amortissement (22) peuvent être sollicités par l'unité de freinage (24).

2. Dispositif de verrouillage selon la revendication 1,
**caractérisé en ce que** l'unité de freinage (24) comprend un frein électromagnétique.

3. Dispositif de verrouillage selon au moins l'une des revendications précédentes,
**caractérisé en ce que** l'unité de freinage (24) peut être actionnée de manière monostable selon le principe du courant de fonctionnement.

4. Dispositif de verrouillage selon l'une des revendications 1 à 2,
**caractérisé en ce que** l'unité de freinage (24) peut être actionnée de manière bistable.

5. Dispositif de verrouillage selon au moins l'une des revendications précédentes,
**caractérisé en ce que** le circuit d'amortissement (22) peut être commandé par l'intermédiaire de l'unité d'évaluation et/ou de commande (26).

6. Dispositif de verrouillage selon la revendication 5,
**caractérisé en ce que** le circuit d'amortissement (22) comprend au moins un élément de commutation qui peut être commandé par l'intermédiaire de l'unité d'évaluation et/ou de commande (26), par l'intermédiaire duquel une modulation de largeur d'impulsion du courant de moteur peut être effectuée.

7. Dispositif de verrouillage selon au moins l'une des revendications précédentes,
**caractérisé en ce que** l'unité de freinage (24) peut être commandée par l'intermédiaire de l'unité d'évaluation et/ou de commande (26) pour générer un verrouillage autolimité du vantail (12).

8. Dispositif de verrouillage selon au moins l'une des revendications précédentes,
**caractérisé en ce que** l'unité de freinage (24) peut être commandée par l'intermédiaire de l'unité d'évaluation et/ou de commande (26) pour régler un retard de fermeture prédéfinissable du vantail (12).

9. Dispositif de verrouillage selon au moins l'une des revendications précédentes,
**caractérisé en ce que** l'unité de freinage (24) peut être commandée par l'intermédiaire de l'unité d'évaluation et/ou de commande (26) en fonction de signaux de sortie d'un système de capteurs de sécurité.

10. Dispositif de verrouillage selon au moins l'une des revendications précédentes,
**caractérisé en ce que**, dans le cas d'une porte à deux vantaux comportant un vantail fixe et un vantail mobile, au moins un moteur électrique (14 ; 16) utilisé comme générateur est associé à chacun des deux vantaux (12) et, afin de verrouiller les deux vantaux (12), l'arbre moteur respectif d'au moins un moteur électrique associé à un vantail (12) respectif peut être sollicité par une unité de freinage (24).

11. Dispositif de verrouillage selon la revendication 10,
**caractérisé en ce que** la séquence de fermeture des deux vantaux (12) peut être commandée et/ou régulée par l'intermédiaire de l'unité d'évaluation et/ou de commande (26).

12. Dispositif de verrouillage selon l'une des revendications 10 à 11,
**caractérisé en ce que**, dans le cas d'une porte à deux vantaux comportant un vantail fixe et un vantail mobile, l'unité d'évaluation et de commande (26) est équipée d'un accumulateur ou d'une batterie supplémentaire (42).

13. Dispositif de verrouillage selon au moins l'une des revendications précédentes,
**caractérisé en ce que**, dans le cas d'un vantail (12) d'une porte coupe-feu ou similaire, l'unité de freinage (24) associée au vantail peut être commandée par l'intermédiaire de l'unité d'évaluation et/ou de commande (26) de manière à ce qu'un verrouillage respectif du vantail (12) soit libéré en cas d'incendie.

14. Ferme-porte (44) comprenant un accumulateur d'énergie mécanique (46) qui peut être chargé par ouverture manuelle du vantail de porte avec une énergie potentielle qui peut être utilisée pour fermer le vantail de porte, et comprenant un dispositif de verrouillage,
**caractérisé en ce que** le dispositif de verrouillage (10) est conçu selon au moins l'une des revendications précédentes.
